# EUROPÄISCHE PATENTANMELDUNG

(11) **EP 0 956 997 A1**
(43) Veröffentlichungstag der Anmeldung: **17.11.1999**
(21) Anmeldenummer: 99108736.2
(22) Anmeldetag: 03.05.1999
(51) Int. Cl.: B60P 1/44

(54) **Plattform für Hubladebühnen**

(30) Priorität: 15.05.1998 DE 19821947
(71) Anmelder: Bär, Gerd, 74078 Heilbronn (DE)
(72) Erfinder: Bär, Gerd, 74078 Heilbronn (DE)
(74) Vertreter: KOHLER SCHMID + PARTNER

(57) **Zusammenfassung**

Bei einer Plattform (1) für eine Hubladebühne eines Fahrzeugs, mit einem Deckblech (4) und einer das Deckblech (4) tragenden Unterkonstruktion aus Längs- und Querrippen (5, 6), wobei die Längsrippen (5) und/oder Querrippen (6) einen zum Deckblech (4) offenen Querschnitt aufweisen und jeweils ihre zwei freien Seitenschenkel (5a, 5b; 6a, 6b) mit dem Deckblech (4) verbunden, vorzugsweise verschweißt sind, weisen die freien Seitenschenkel (5a, 5b; 6a, 6b) der Längsrippen (5) und/oder Querrippen (6) jeweils einen Flansch (5c; 6c) als Auflagefläche für das Deckblech (4) auf. Dadurch können das Gewicht und dabei gleichzeitig auch die beim Überrollen von Gabelhubwagen im Deckblech auftretenden Spannungen reduziert werden.

## Beschreibung

Die Erfindung betrifft eine Plattform für eine Hubladebühne eines Fahrzeugs, mit einem Deckblech und einer das Deckblech tragenden Unterkonstruktion aus Längs- und Querrippen, wobei die Längsrippen und/oder Querrippen einen zum Deckblech offenen Querschnitt aufweisen und jeweils ihre zwei freien Seitenschenkel mit dem Deckblech verbunden, vorzugsweise verschweißt sind.

Eine derartige Plattform ist beispielsweise durch die deutsche Patentanmeldung P 42 14 438.8 bekanntgeworden.

Bei dieser bekannten Plattform aus Stahl sind das Deckblech und ein Unterseitenblech tragende Elemente, die im wesentlichen miteinander durch Längs- und Querrippen verbunden sind. Diese im Querschnitt trapezförmigen Rippen aus Stahlblech sind zum Deckblech offen und mit ihren freien Seitenschenkeln mittels Schrittschweißungen mit dem Deckblech und an ihrem Boden mittels Lochschweißungen mit dem Unterseitenblech verbunden.

Allerdings unterliegt das Unterseitenblech durch die bei den Lochschweißungen auftretenden Wärmeeinflüssen einem Verzug, so daß es in der Serienproduktion schwierig ist, eine gleichmäßige Qualität zu erzeugen. Außerdem müssen die vielen Schweißpunkte abgeschliffen werden. Diese Technik erfordert weiterhin ein relativ dickes Unterseitenblech, um die Kräfte aufnehmen zu können, was sich ungünstig auf das Gesamtgewicht der Plattform auswirkt.

Außerdem entsteht bei der bekannten Plattform durch den im wesentlichen T-förmigen Anschluß der freien Seitenwände der Rippen unter dem Deckblech eine sehr kleine Auflagefläche für das Deckblech. Da die Rippen nur eine Wanddicke von 2 - 3 mm haben, entsteht bereits durch den Schweißvorgang, insbesondere bei durchgeschweißten Rippen, im Bereich des Rippensteges und der Schweißnaht ein Verzug, der auf der Oberseite erkennbar ist. Beim Überrollen der Plattform mit Gabelhubwagen und deren kleinen Raddurchmessern entstehen zudem hohe Linienlasten, die das freigespannte Deckblech zwischen den Rippen verformen. Durch praxisübliche Überlastungen entstehen im Bereich der Rippen und deren Schweißnähte sehr hohe Spannungen oberhalb der Streckgrenze, die das Deckblech plastisch verformen. Dem wird bisher dadurch entgegengewirkt, daß die durch Längs- und Querrippen gebildeten Felder klein und das Deckblech stark gehalten werden. Beides erzeugt eine schwere und teure Konstruktion.

Es ist daher die Aufgabe der vorliegenden Erfindung, bei einer Plattform der eingangs genannten Art das Gewicht und dabei gleichzeitig auch die beim Überrollen von Gabelhubwagen im Deckblech auftretenden Spannungen zu reduzieren.

Diese Aufgabe wird erfindungsgemäß auf überraschend einfache, aber wirkungsvolle Weise dadurch gelöst, daß die freien Seitenschenkel der Längsrippen und/oder Querrippen jeweils einen Flansch als Auflagefläche für das Deckblech aufweisen.

Der mit der Erfindung erzielte Vorteil besteht darin, daß durch die flanschartige Ausbildung der Längs- und/oder Querrippen (oder -holme bzw. -profile) das Deckblech großflächiger abgestützt ist und dadurch die Spannung im Deckblech beim Überrollen stark reduziert wird. Dies ermöglicht die Verwendung dünnerer Deckbleche. Durch die gleichmäßigere Spannungsverteilung in Deckblech und Verrippung können die erforderlichen Wanddicken reduziert werden, was zu einem geringeren Eigengewicht, insbesondere bei der Stahlausführung, und damit zu geringeren Kosten führt. Aufgrund der hohen Rippenauflage kann insbesondere das Deckblech extrem dünn gewählt werden. Weiterhin kann eine billige Stahlplattform mit einem Rückendeckblech aus Aluminium versehen werden, welches auch bei Bodenberührung d.h. bei Kratzern nicht rostet. Der Automatisierungsgrad der Einzelteilfertigung bei kleinen handlichen Teilen wird erhöht, da das größte Teil, das Plattformdeckblech, keine Bearbeitung benötigt. Und schließlich führt die erfindungsgemäße Plattform zu einer dauerhaften Arbeitserleichterung für den Betreiber, da sich die Plattform nicht verformt und nicht mit der Zeit zu einem "Wellblech" wird. Letzteres würde wesentlich höhere Kräfte zum Bewegen von Handhubwagen und Rollbehältern erfordern.

Versuche haben gezeigt, daß sich durch die erfindungsgemäße Ausbildung das Gewicht einer 1800 mm x 2500 mm großen Plattform um mehr als 25% reduzieren läßt.

Vorzugsweise ist auch am anschlußseitigen querverlaufenden Torsionsprofii der Plattform mindestens ein Flansch als Auflagefläche für das Deckblech vorgesehen, so daß das Deckblech auf seiner gesamten Fläche über Flansche abgestützt werden kann. Im anschlußseitigen Endbereich ist das Torsionsprofil möglichst derart ausgebildet, daß das Deckblech ohne Ausklinkung und Kantung direkt anschließen kann. Das Deckblech und das Torsionsprofil bilden zusammen die glatte und ebene Oberseite der Plattform.

Die Plattform kann seitlich jeweils durch ein, insbesondere U-förmiges Abschlußprofii mit einem Flansch als Auflagefläche für das Deckblech abgeschlossen sein. Dieses Abschlußprofil, das abgerundete äußere Kanten aufweist, dient außerdem als Breitenausgleich der Plattform.

Der Flansch ist von der entsprechenden Seitenwand der Rippe bzw. des Torsionsprofils abgewinkelt und zwar vorzugsweise nach außen, um das Deckblech auf einer möglichst großen Fläche abzustützen.

Wenn ein bzw. die Flansche Löcher aufweisen und mittels Lochschweißungen mit dem Deckblech verbunden sind, werden Endkrater und damit festigkeitsrelevante Kerben der Schweißung vermieden. Diese Maßnahme erlaubt die Verwendung von dünnwandigerem Material. Zusätzlich geht mit dieser Technik eine gravierende Verkürzung der Schweißnahtlänge einher, die eine proportional geringere Schweißzeit und selbstverständlich auch weit weniger Verzugsprobleme bedeutet. Durch die Verbindungstechnik der Lochschweißung können sowohl hochfeste als auch kerbempfindliche Werkstoffe wie Aluminium verwendet werden.

Bevorzugt ist bei Längsrippen mit beidseitigen Flanschen der mittige Querabstand zweier benachbarter Längsrippen etwa doppelt so groß wie der Querabstand der Lochschweißungen in den beiden Flanschen einer Längsrippe. Diese Anordnung der Längsrippen führt dazu, daß die Lochschweißungen, im Querschnitt betrachtet, in etwa äquidistant angeordnet sind.

Bei ganz besonders bevorzugten Ausführungsformen der Erfindung bilden die Längsrippen und/oder Querrippen auf der dem Deckblech abgewandten Seite eine ebene Auflagefläche, an der ein Rückendeckblech befestigt, z.B. aufgeklebt werden kann. Die ansonsten unschöne Rückansicht der Plattform wird so durch das aufgeklebte Rückendeckblech zu einer optisch optimalen Rückfläche der Plattform, die aufgrund ihrer glatten, fugenlosen Oberfläche optimal für Werbezwecke genutzt werden kann. Als Rückendeckblech kann z.B. 0,6 mm dünner Stahl verwendet werden, der bereits industriell beschichtet/lackiert sein kann.

In bevorzugter Ausführungsform weisen die Längsrippen und/oder Querrippen und/oder das Torsionsprofii, abgesehen von ihren Flanschen, einen etwa U- oder trapezförmigen Querschnitt auf, die insbesondere auch eine großflächige Anlagefläche für das Rückdeckblech bieten.

Besonders vorteilhaft sind solche Ausführungsformen, bei denen die Längsrippen an mindestens einer Seite, vorzugsweise an allen Seiten, und/oder das Torsionsprofil, vorzugsweise auf der der Plattformspitze zugewandten Seite, Löcher aufweisen. Diese Maßnahme führt zu einer weiteren Gewichtsoptimierung und ermöglicht außerdem die Anwendung einer Reinigung und Grundierung mittels eines Badsystems, wie z.B. der kathodischen Tauchlackierung. Insbesondere wenn die Längsrippen und das Torsionsprofil ohnehin auf einer Nippel- oder Lasermaschine hergestellt werden, können Löcher an den Stellen, bei denen geringere Spannungen auftreten, ohne zusätzlichen Aufwand eingestanzt werden. Diese Konstruktion erlaubt eine werkstoffgerechte Dimensionierung und bietet optimale Voraussetzungen für Oberflächenbehandlung und Beschichtung im Badverfahren, da die Konstruktion von Haus aus die dazu erforderlichen Auslaufbohrungen hat.

In den nach oben offenen Längs- und Querrippen können Zusatzeinrichtungen aufgenommen sein, insbesondere Abrollsicherungen oder Blinkleuchten, für die dann im Deckblech entsprechende Öffnungen vorzusehen sind.

Zumindest alle wesentlichen Teile der Plattform, also Deckblech, Torsionsprofil, Längs- und Querrippen, und auch Abschlußprofil sowie die Plattformspitze können als Blechkonstruktion z.B. aus Stahl oder Aluminium ausgeführt werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: die Rück- oder Unteransicht der Plattform, wobei die durch ein Rückendeckblech verdeckten Längs- und Querrippen gestrichelt dargestellt sind;
- Fig. 2: einen Ausschnitt der Plattform in vergrößerter Ansicht und mit ausgelassenem Rückendeckblech entsprechend II in Fig. 1;

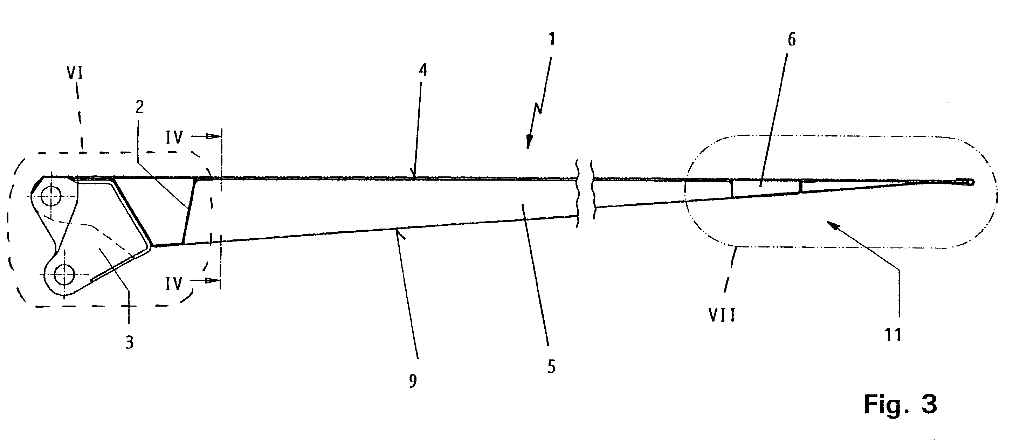

- Fig. 3: die Seitenansicht der Plattform, wobei der seitliche Randabschluß der Plattform ausgelassen ist;
- Fig. 4: den Querschnitt der Plattform entsprechend IV-IV in Fig. 3;
- Fig. 5: eine vergrößerte Querschnittsansicht der in Fig. 4 gezeigten Plattform im Bereich einer Längsrippe;
- Fig. 6: den anschlußseitigen Bereich der Plattform in einer vergrößerten Ansicht gemäß Fig. 3; und
- Fig. 7: die Plattformspitze Plattform in einer vergrößerten Ansicht des Ausschnitts VII in Fig. 3.

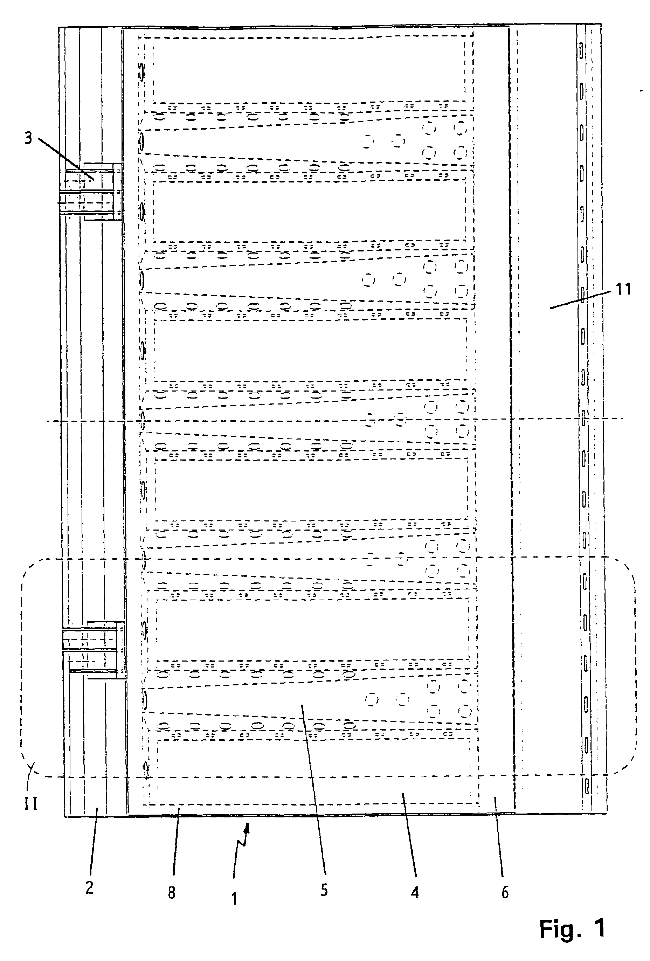

Das Rückgrat der in Fig. 1 dargestellten Plattform **1** bildet ein Torsionsprofil **2**, welches gleichzeitig den fahrzeugseitigen Endbereich der Plattform darstellt. Die Plattform 1 ist mit dem Hubwerk der Hubladebühne des Fahrzeugs über zwei Anschlußköpfe **3** verbunden, die nicht näher beschrieben sind und mit dem Torsionsprofil 2 direkt verschweißt oder bei einer Aluminiumkonstruktion verschraubt sein können. In diesem Falle ist innerhalb des Torsionsprofils 2 an der Anlagefläche eine Platte mit Gewinde erforderlich. Die nötigen Ausklinkungen für den Anschlußkopf 3 befinden sich im Torsionsprofil 2.

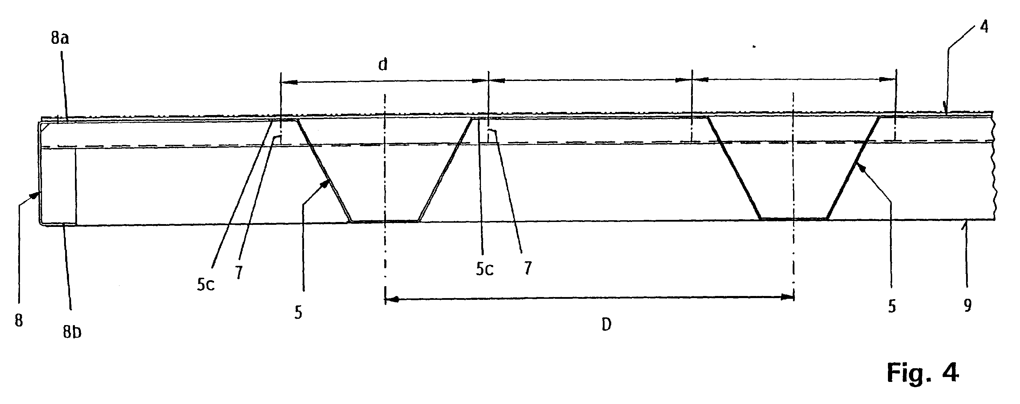

Die Plattform 1 weist ein Deckblech **4** auf, das ein- oder zweiteilig ausgebildet sein kann. Dies hat den Grund, daß für das Deckblech 4 ein Fertigformat (z.B. 1250 x 2500 mm) verwendet und unbearbeitet verarbeitet werden kann. Als Unterkonstruktion für das Deckblech 4 dienen neben dem Torsionsprofil 2 fünf Längsrippen **5** und eine Querrippe **6**, auf denen das Deckblech 4 jeweils aufliegt. Die Längs- und Querrippen 5, 6 sowie das Torsionsprofil 2 sind abgekantete Blechprofile mit zum Deckblech 4 offenem, trapezförmigen Querschnitt, wobei die jeweiligen zwei Seitenschenkel **2a**, **2b**, **6a**, **6b** und **5a** dieser Blechprofile jeweils einen Flansch **2c**, **5c**, **6c**, als Auflagefläche für das Deckblech 4 aufweisen. Das Deckblech 4 ist mit diesen Flanschen 2c, 5c, 6c mittels Lochschweißungen **7** (in den Fign. 4, 5 und 7 mit vertikalen strichtpunktierten Linien angedeutet) verbunden, wozu in den Flanschen 2c, 5c, 6c entsprechende Langlöcher **5d, 6d** vorgesehen sind (die Langlöcher im Torsionsprofil 2 sind in der Zeichnung nicht dargestellt).

So läßt sich das Deckblech 4 fast ohne Schweißverzug durch die Flansche der Unterkonstruktion auf einer großen Fläche unterstützen, d.h., die Unterkonstruktion unterstützt mit ihren flanschförmigen Ankantungen das Deckblech 4 großflächig. Im Ergebnis bedeutet dies, daß die Spannungen auch bei Überlastung die Streckgrenze des Werkstoffs nicht überschreiten und die ganze Verformung im elastischen Bereich bleibt.

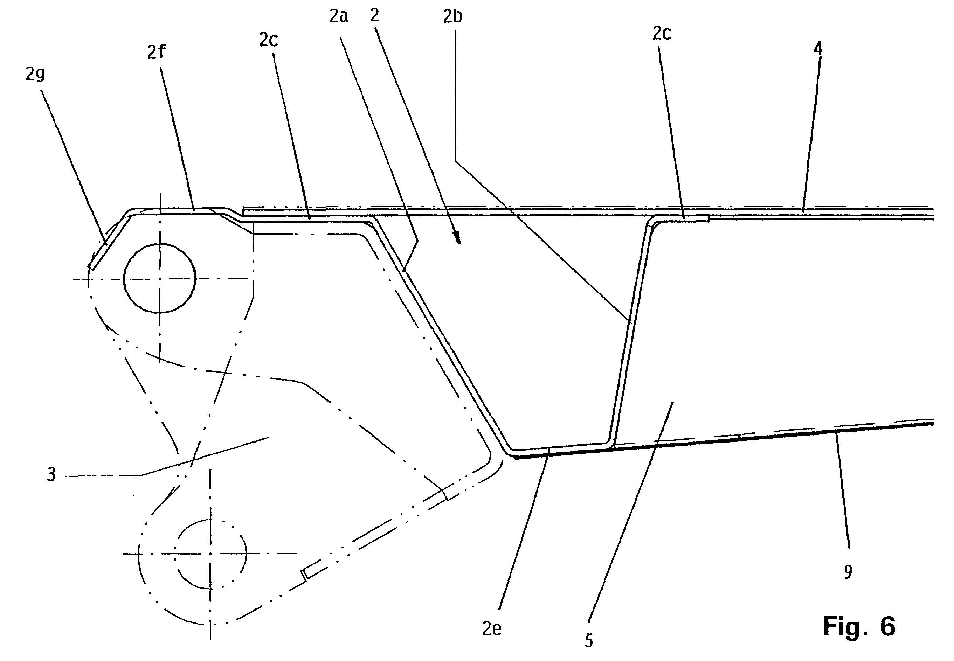

Wie Fig. 6 zeigt, schließt sich das Deckblech 4 ohne Kantung und Ausklinkung an den oberen Schenkel **2f** des Torsionsprofils 2 an, so daß die gesamte Oberseite der Plattform 1 eine glatte und ebene Fläche ist. Mit seinem gegenüber dem Schenkel 2f abgekanteten freien Ende **2g** umgreift das Torsionsprofil 2 die Anschlußköpfe 3.

Als seitlicher Randabschluß dient ein U-förmiges Abschlußprofil (Kant-U-Profil) **8** mit einem oberen Flansch **8a** als Auflagefläche für das Deckblech 4 (Fig. 4). Das Abschlußprofii 8, das ebenfalls mit Lochschweißungen mit dem Deckblech 4 verschweißt ist, ermöglicht bei vorgegebener Breite des Deckbleches 4 einen Breitenausgleich für eine gewünschte Plattformbreite und weist abgerundete Außenkanten auf.

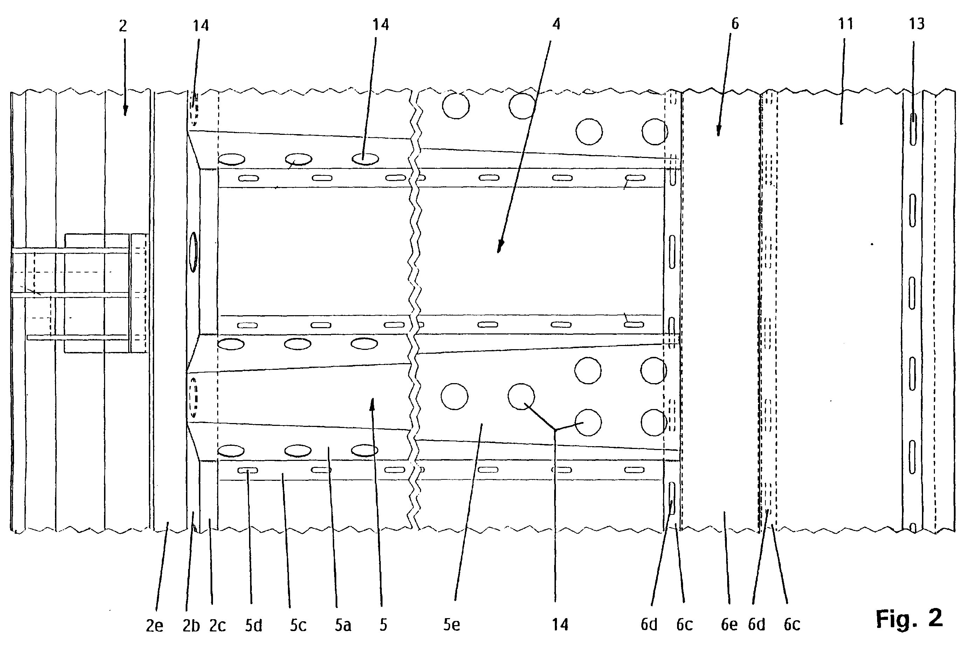

Wie die Fign. 2 und 4 zeigen, bilden die in einer Ebene liegenden flächigen Unterseiten **2e**, **5e**, **6e** und **8b** des Torsionsprofils 2, der Rippen 5, 6 und des Abschlußprofils 8 die Auflagefläche für ein aufgeklebtes Rückendeckblech **9**.

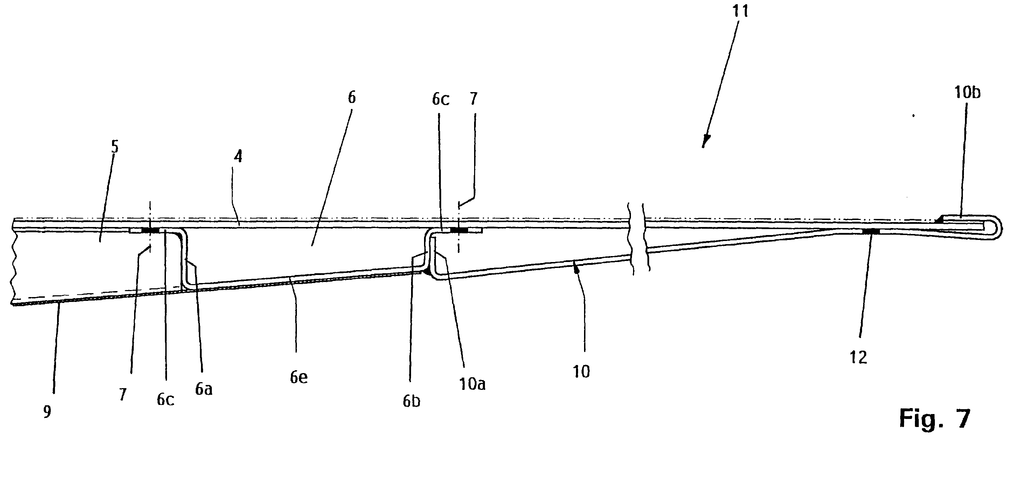

Als weiteres Querprofii dient ein aus einem Blech **10** gebildetes Spitzenprofil **11**, dessen Ausbildung in Fig. 7 gezeigt ist und in an sich bekannter Weise erfolgt. Ein vertikal abgekantetes freies Ende **10a** ist mit dem fahrzeugabgewandten Seitenschenkel 6b der Querrippe 6 verschweißt, während das andere Ende **10b** um das Deckblech 4 herum umgebogen und mit diesem verschweißt ist. Außerdem ist das Blech 10 mittels Lochschweißung **12** in Langlöchern **13** (Fig. 2) noch mit der Unterseite des Deckbleches 4 verbunden. Das Blech 10 ist möglichst aus rostfreiem Material hergestellt, da es für die Bodenauflage dient. In der nach oben offenen, muldenförmigen Querrippe 6 können Abrollsicherungen oder Blinkleuchten untergebracht werden, für die dann in dem Deckblech 4 entsprechende Öffnungen vorgesehen sind.

Um das Gewicht der Plattform 1 noch weiter zu reduzieren, sind im Torsionsprofil 2 und in den Längsrippen 5 Lochungen **14** vorgesehen (Fig. 2), wobei die Optimierung nach festigkeitsrelevanten Gesichtspunkten erfolgt. Das Torsionsprofil 2, die Längsrippen 5 und auch die Querrippe 6 können daher mit ihren Abkantungen, Lochungen bzw. Ausklinkungen kostengünstig auf einer Nippel- oder Lasermaschine hergestellt werden.

Die Aufteilung der Längsrippen 5 ist im Detail in Fig. 4 zeigt. Der mittige Querabstand **D** zweier benachbarter Längsrippen 5 ist doppelt so groß wie der Querabstand **d** der Lochschweißungen 7 in den beiden Flanschen 5c einer Längsrippe 5 gewählt. Die Lochschweißungen 7 sind somit, im Querschnitt betrachtet, äquidistant angeordnet.

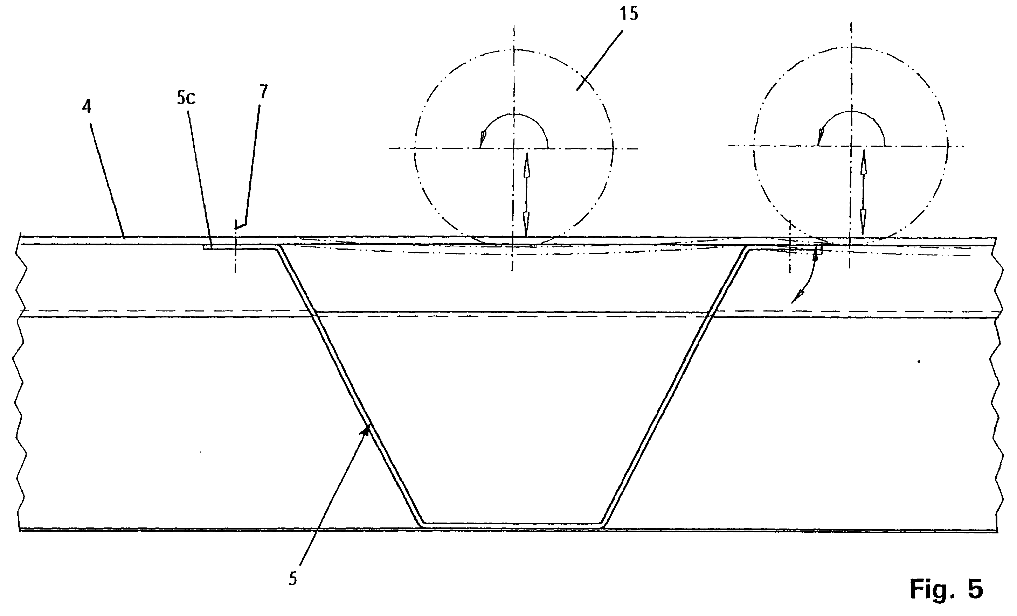

Fig. 5 zeigt schematisch die Plattform bei Belastung durch die Rollen **15** eines Gabelhubwagens. Durch die großflächige Unterstützung des Deckbleches 4 durch die Flansche 5c der Längsrippe 5 wird das Deckblech 4 im Bereich zwischen zwei Flanschen 5c nur elastisch verformt (strichpunktierte Linien), d.h., es treten keine plastischen Verformungen der Oberseite der Plattform 1 auf.

## Patentansprüche

1. Plattform (1) für eine Hubladebühne eines Fahrzeugs, mit einem Deckblech (4) und einer das Deckblech (4) tragenden Unterkonstruktion aus Längs- und Querrippen (5, 6), wobei die Längsrippen (5) und/oder Querrippen (6) einen zum Deckblech (4) offenen Querschnitt aufweisen und jeweils ihre zwei freien Seitenschenkel (5a; 6a, 6b) mit dem Deckblech (4) verbunden, vorzugsweise verschweißt sind,
dadurch gekennzeichnet,
daß die freien Seitenschenkel (5a; 6a, 6b) der Längsrippen (5) und/oder Querrippen (6) jeweils einen Flansch (5c; 6c) als Auflagefläche für das Deckblech (4) aufweisen.

2. Plattform nach Anspruch 1, dadurch gekennzeichnet, daß am anschlußseitigen querverlaufenden Torsionsprofil (2) der Plattform (1) mindestens ein Flansch (2c) als Auflagefläche für das Deckblech (4) vorgesehen ist.

3. Plattform nach Anspruch 2, dadurch gekennzeichnet, daß das Torsionsprofil (2) im anschlußseitigen Endbereich derart ausgebildet ist, daß das Deckblech (4) ohne Ausklinkung und Kantung direkt anschließen kann.

4. Plattform nach einem der vorhergehenden Ansprüche, dadurch gekennzeichnet, daß die Plattform (1) seitlich jeweils durch ein, insbesondere U-förmiges Abschlußprofil (8) mit einem Flansch (8a) als Auflagefläche für das Deckblech (9) abgeschlossen ist.

5. Plattform nach einem der vorhergehenden Ansprüche, dadurch gekennzeichnet, daß der Flansch (2c; 5c; 6c) nach außen abgewinkelt ist.

6. Plattform nach einem der vorhergehenden Ansprüche, dadurch gekennzeichnet, daß ein Flansch (2c; 5c; 6c; 8a) Löcher (5d; 6d; 13) aufweist und mittels Lochschweißungen mit dem Deckblech (4) verbunden ist.

7. Plattform nach einem der vorhergehenden Ansprüche, dadurch gekennzeichnet, daß bei Längsrippen (5) mit beidseitigen Flanschen (5c) der mittige Querabstand (D) zweier benachbarter Längsrippen (5) etwa doppelt so groß wie der Querabstand (d) der Lochschweißungen (7) in den beiden Flanschen (5c) einer Längsrippe (5) ist.

8. Plattform nach einem der vorhergehenden Ansprüche, dadurch gekennzeichnet, daß die Längsrippen (5) und/oder Querrippen (6) auf der dem Deckblech (4) abgewandten Seite eine ebene Auflagefläche für ein Rückendeckblech (9) bilden.

9. Plattform nach einem der vorhergehenden Ansprüche, dadurch gekennzeichnet, daß die Längsrippen (5) und/oder die Querrippen (6) und/oder das Torsionsprofil (2), abgesehen von ihren Flanschen (2c; 5c; 6c), einen etwa U- oder trapezförmigen Querschnitt aufweisen.

10. Plattform nach einem der vorhergehenden Ansprüche, dadurch gekennzeichnet, daß die Längsrippen (5) an mindestens einer Seite, vorzugsweise an allen Seiten, und/oder das Torsionsprofil (2), vorzugsweise auf der der Plattformspitze (11) zugewandten Seite, Löcher (14) aufweisen.

11. Plattform nach einem der vorhergehenden Ansprüche, dadurch gekennzeichnet, daß in einer Längsrippe (5) und/oder Querrippe (6) Zusatzeinrichtungen, insbesondere eine Abrollsicherung oder eine Leuchte, aufgenommen sind.

12. Plattform nach einem der vorhergehenden Ansprüche, dadurch gekennzeichnet, daß die Plattform (1) eine Blechkonstruktion ist.
